# EUROPEAN PATENT SPECIFICATION

(11) **EP 4 448 702 B1**
(45) Date of publication and mention of the grant of the patent: **04.02.2026**
(21) Application number: 22830522.3
(22) Date of filing: 06.12.2022
(51) Int. Cl.: C10M 177/00, C08F 20/00, C10N 20/00, C10N 20/02, C10N 20/04, C10N 30/08, C10N 30/10, C10N 30/00, C10N 40/08, C10N 70/00, C08F 220/18, C08K 5/01

(54) **HYDRAULIC LUBRICANT FORMULATIONS WITH HIGH FLASH POINT AND IMPROVED SHEAR STABILITY**
HYDRAULISCHE SCHMIERMITTELFORMULIERUNGEN MIT HOHEM FLAMMPUNKT UND VERBESSERTER SCHERSTABILITÄT
FORMULATIONS DE LUBRIFIANTS HYDRAULIQUES À POINT D'ÉCLAIR ÉLEVÉ ET STABILITÉ AU CISAILLEMENT AMÉLIORÉE

(30) Priority: 17.12.2021 EP 21215475
(43) Date of publication of application: 23.10.2024
(73) Proprietor: Evonik Operations GmbH, 45128 Essen (DE)
(72) Inventor: MÄHLING, Frank-Olaf, 68165 Mannheim (DE); JOVIC, Kristina, 649413 Singapore (SG); SMIRNOV, Anatolij, 64354 Reinheim (DE)
(74) Representative: Evonik Patent Association
(86) International application number: PCT/EP2022/084545
(87) International publication number: WO 2023/110529

(56) References cited:
- WO-A1-2018/115589
- WO-A1-2021/228701
- GB-A- 1 440 168
- US-A- 3 283 029
- US-A1- 2007 259 792

## Description

The present invention is directed to compositions comprising a high content of saturated or unsaturated isoparaffinic hydrocarbons comprising 12-24 carbon atoms and a polyalkyl (meth)acrylate, a method for preparing such compositions and their use to raise the flash point of hydraulic fluids where a good low temperature flow is important, e.g. of compressor oils, shock absorber fluids, power steering fluids and central hydraulic fluids.

Polyalkyl(meth)acrylate-based viscosity index (VI) improvers can be produced in a variety of solvents. Preferred are API Group I, II and III oils. The API currently defines five groups of lubricant base stocks (API 1509, Annex E - API Base Oil Interchangeability Guidelines for Passenger Car Motor Oils and Diesel Engine Oils, September 2011). Groups I, II and III are mineral oils which are classified by the amount of saturates and sulphur they contain and by their viscosity indices; Group IV are polyalphaolefins; and Group V are all others, including e.g. ester oils. The table below illustrates these API classifications.

| Group | Saturates | Sulphur content | Viscosity Index (VI) |
|---|---|---|---|
| I | < 90% | > 0.03% | 80-120 |
| II | at least 90% | not more than 0.03% | 80-120 |
| III | at least 90% | not more than 0.03% | at least 120 |
| IV | All polyalphaolefins (PAOs) | | |
| V | All others not included in Groups I, II, III or IV (e.g. ester oils) | | |

For low temperature applications like hydraulic fluids, lighter oils are typically used, commonly naphthenic base oils. They are known for their good low temperature performance.

US 3,283,029 is directed to hydraulic fluids comprising polymer bases prepared by polymerization of propylene followed by hydrogenation and polymethacrylates as additives.

The current trend the lubricants industry is faced with is sustainability. The requirements of environment, social, and governance (ESG) standards regarding the reduction of the carbon footprint of finished lubricants are getting stricter and will have a greater impact on the businesses in the near future.

Despite the prevalence of re-refined and bio-sourced base stocks, the focus of carbon reduction in the lubricants industry has so far been limited. During the last years, the lubricant industry seeks for fuel economy by decreasing the viscosity of the base oils, i.e. by continuously replacing mineral oils by semi-synthetic or synthetic base oil.

Isoparaffinic hydrocarbons with and without post treatment (saturated/hydrogenated and unsaturated) are synthetic base oil alternatives and are commonly used as intermediates in the production of alcohols, organic acids, water treatment, drilling oils or paraffins. They belong chemically to the group of special polyolefins, similar to polyalphaolefins, known as API Group IV base oil.

Tetrabutene is obtained by oligomerisation of a mixture of 1-butene and 2-butene using a heterogeneous catalyst which produces di-n-butene, tributene, tetrabutene as well as higher oligomers, followed by subsequent distillation. Finally, tetrabutene is hydrogenated to get tetrabutane. The oligomerization of olefins is carried out on a large industrial scale either in the homogeneous phase using a dissolved catalyst or heterogeneously over a solid catalyst, or else with a biphasic catalyst system (see US 2020/0361835).

It was now found that tetrabutene is an ideal solvent to run alkyl(meth)acrylate homo- and co-polymerizations and can act as a base oil in industrial oil formulations, especially in hydraulic fluids.

The advantages are a potentially lower consumption of auxiliaries like chain transfer agent and initiators, higher flash points compared to naphthenic solvents of choice, excellent low temperature properties, improved shear performance, and potentially better sustainability than other hydrocarbon base oils.

### Detailed description of the invention

A first object of the present invention is directed to a composition comprising:
(A) 5 wt.% to 80 wt.%, preferably 20 wt.% to 45 wt.%, of tetrabutene; and
(B) 20 wt.% to 95 wt.%, preferably 55 wt.% to 80 wt.%, of a polyalkyl (meth)acrylate comprising:
   (a) 5 wt.% to 25 wt.% of C1-4 alkyl (meth)acrylates, preferably methyl methacrylate;
   (b) 75 wt.% to 95 wt.% of linear or branched C8-15 alkyl (meth)acrylates, preferably linear or branched C12-15 alkyl (meth)acrylates; and
   (c) 0 wt.% to 0.5 wt.% of linear or branched C16-20 alkyl (meth)acrylates, preferably linear C16-18 alkyl (meth)acrylates.

The content of each component (A) and (B) is based on the total amount of the composition. In particular, the proportions of components (A) and (B) add up to 100% by weight.

The content of each component (a), (b) and (c) is based on the total amount of the polyalkyl (meth)acrylate. In particular, the proportions of components (a), (b) and (c) add up to 100% by weight.

The term "(meth)acrylate" refers to both, esters of acrylic acid and esters of methacrylic acid. Methacrylates and mixtures of methacrylates and acrylates are preferred over acrylates.

The C1-4 alkyl (meth)acrylates for use in accordance with the invention are esters of (meth)acrylic acid and straight chained or branched alcohols having 1 to 4 carbon atoms. The term "C1-4 alkyl (meth)acrylates" encompasses individual (meth)acrylic esters with an alcohol of a particular length, and likewise mixtures of (meth)acrylic esters with alcohols of different lengths.

Suitable C1-4 alkyl (meth)acrylates include, for example, methyl (meth)acrylate, ethyl (meth)acrylate, n-propyl (meth)acrylate), iso-propyl (meth)acrylate, n-butyl (meth)acrylate, iso-butyl (meth)acrylate and tert-butyl (meth)acrylate. Particularly preferred C1-4 alkyl (meth)acrylates are methyl (meth)acrylate and n-butyl (meth)acrylate; methyl methacrylate being especially preferred.

The C8-15 alkyl (meth)acrylates for use in accordance with the invention are esters of (meth)acrylic acid and alcohols having 8 to 15 carbon atoms. The term " C8-15 alkyl (meth)acrylates" encompasses individual (meth)acrylic esters with an alcohol of a particular length, and likewise mixtures of (meth)acrylic esters with alcohols of different lengths.

The suitable C8-15 alkyl (meth)acrylates include, for example, 2-ethylhexyl (meth)acrylate, n-nonyl(meth)acrylate, decyl (meth)acrylate, 2-propylheptyl (meth)acrylate, undecyl (meth)acrylate, 2-methylundecyl (meth)acrylate, dodecyl (meth)acrylate, 2-methyldodecyl (meth)acrylate, tridecyl (meth)acrylate, 2-methyltridecyl (meth)acrylate, tetradecyl (meth)acrylate and/or pentadecyl (meth)acrylate.

Particularly preferred C8-15 alkyl methacrylates are methacrylic esters of a linear C12-14 alkyl alcohol mixture (C12-14 alkyl methacrylate), especially lauryl methacrylate, or mixtures of linear and branched C12-15 alcohol mixtures.

The C16-20 alkyl (meth)acrylates for use in accordance with the invention are esters of (meth)acrylic acid and straight chain or branched alcohols having 16 to 20 carbon atoms. The term "C16-20 alkyl methacrylates" encompasses individual (meth)acrylic esters with an alcohol of a particular length, and likewise mixtures of (meth)acrylic esters with alcohols of different lengths. Suitable C16-20 alkyl (meth)acrylates include, for example, hexadecyl (meth)acrylate, 2-methylhexadecyl (meth)acrylate, heptadecyl (meth)acrylate, 5-isopropylheptadecyl (meth)acrylate, octadecyl (meth)acrylate, nonadecyl (meth)acrylate and eicosyl (meth)acrylate.

The weight-average molecular weight of the polyalkyl(meth)acrylate polymers prepared according to the present invention is in the range of 30,000 g/mol to 200,000 g/mol, preferably in the range of 40,000 g/mol to 170,000 g/mol.

Preferably, the polyalkyl(meth)acrylate polymers according to the present invention have a polydispersity index (PDI) M_{w}/Mₙ in the range of 1 to 4, more preferably in the range of 2 to 3.

M_{w} and Mₙ are determined by size exclusion chromatography (SEC) using commercially available polymethylmethacrylate standards. The determination is performed with gel permeation chromatography with THF as eluent.

A second object of the present invention is directed to a method for the preparation of a composition as described further above, the method comprising the steps of:
(i) preparing a monomer mixture comprising:
   (A) 5 wt.% to 80 wt.%, preferably 20 wt.% to 45 wt.%, of tetrabutene;
   (B) 20 wt.% to 95 wt.%, preferably 55 wt.% to 80 wt.%, of a alkyl (meth)acrylate comprising:
      (a) 5 wt.% to 25 wt.% of C1-4 alkyl (meth)acrylates, preferably methyl methacrylate;
      (b) 75 wt.% to 95 wt.% of linear or branched C8-15 alkyl (meth)acrylates, preferably linear or branched C12-15 alkyl (meth)acrylates; and
      (c) 0 wt.% to 0.5 wt.% of linear or branched C16-20 alkyl (meth)acrylates, preferably linear C16-18 alkyl (meth)acrylates; and
   (C) optionally, a chain transfer agent; and
(ii) charging 10 wt.% to 100 wt.% of the monomer mixture prepared under step (i) to a reaction vessel;
(iii) heating the resulting reaction mixture to the desired reaction temperature;
(iv-1) adding 0.1 wt.% to 0.5 wt.%, based on the total amount of monomers used, of a free radical initiator stepwise to the reaction mixture, or
(iv-2) adding 0.1 wt.% to 0.5 wt.%, based on the total amount of monomers used, of a free radical initiator to the reaction mixture and 0.1 wt.% to 1.0 wt.%, based on the total amount of monomers used, to the monomer mixture prepared under step (i);
(v) feeding continuously 0 wt.% to 90 wt.% of the monomer mixture prepared under step (i) to the reaction vessel;
(vi) optionally, after a reaction time of at least 1 hour, adding 0.2 wt.%, based on the total amount of monomers used, of a further shot of the initiator;
(vii) holding the reaction mixture obtained under step (v) for another 1 to 5 hours; and
(viii) optionally, further processing of the reaction mixture to receive the targeted composition.

The content of each component (A), (B) and (C) is based on the total amount of the composition. In particular, the proportions of components (A), (B) and (C) add up to 100% by weight.

Suitable chain transfer agents (C) are especially oil-soluble mercaptans, for example n-dodecyl mercaptan, tert-dodecyl mercaptan or 2-mercaptoethanol, or else chain transfer agents like for example 2-ethylhexylthioglycolate; n-dodecyl mercaptan being preferred.

The reaction vessel mentioned under step (ii) can be any suitable reaction vessel that is equipped with a stirrer and a temperature control system under inert gas, preferably under nitrogen atmosphere.

The reaction temperature mentioned under step (iii) is generally in the range of 20°C to 200°C, preferably 90°C to 120°C.The polymerization may be carried out at ambient pressure, reduced pressure or elevated pressure, preferred is either ambient or elevated pressure.

The free radical initiator to be used in accordance with the present invention can be selected from the group consisting of azo initiators, such as azobis-isobutyronitrile (AIBN), 2,2'-azobis(2-methylbutyronitrile) (AMBN) and 1,1-azobiscyclohexanecarbonitrile, and peroxy compounds such as methyl ethyl ketone peroxide, acetylacetone peroxide, dilauryl peroxide, tert-butylperoxy-2-ethylhexanoate, tert-amylperoxy-2-ethylhexanoate, ketone peroxide, tert-butyl peroctoate, methyl isobutyl ketone peroxide, cyclohexanone peroxide, dibenzoyl peroxide, tert-butyl peroxybenzoate, tert-butyl peroxyisopropylcarbonate, 2,5-bis(2-ethylhexanoylperoxy)-2,5-dimethylhexane, tert-butyl peroxy-2-ethylhexanoate, tert-butyl peroxy-3,5,5-trimethylhexanoate, dicumyl peroxide, 1,1-bis(tert-butylperoxy)cyclohexane, 1,1-bis(tert-butylperoxy)-3,3,5-trimethylcyclohexane, cumyl hydroperoxide, tert-butyl hydroperoxide, bis(4-tert-butylcyclohexyl) peroxydicarbonate and 2,2-di(tert-butylperoxy)butane, as well as mixtures of two or more of the aforementioned compounds with one another, and mixtures of the afore mentioned compounds with unspecified compounds which can likewise form free radicals.

Preferred initiators are selected from the group consisting of 2,2'-azobis(2-methylbutyronitrile), tert-butylperoxy-2-ethylhexanoate, tert-amylperoxy-2-ethylhexanoate, 1,1-di-tert-butylperoxy-3,3,5-trimethylcyclohexane, tert-butyl-peroxybenzoate, 2,2-di(tert-butylperoxy)butane and tert-butylperoxy-3,5,5-trimethylhexanoate. Especially preferred are tert-butylperoxy-2-ethylhexanoate and tert-amylperoxy-2-ethylhexanoate.

The polyalkyl (meth)acrylates prepared according to the method of the present invention can be further processed. Further reaction steps can be selected from the group consisting of diluting the polyalkyl (meth)acrylates to receive a lower content of solids in the base oil, concentration to receive a higher content of solids in the base oil; filtering the reaction mixture; degassing the reaction mixture (stripping, removal of volatile components); or blending the reaction mixture with further components like other polymers.

A further object of the present invention is directed to the use of tetrabutene as solvent for the preparation of polyalkyl (meth)acrylates.

The polyalkyl (meth)acrylates comprise:
(a) 5 wt.% to 25 wt.% of C1-4 alkyl (meth)acrylates, preferably methyl methacrylate;
(b) 75 wt.% to 95 wt.% of linear or branched C8-15 alkyl (meth)acrylates, preferably linear or branched C12-15 alkyl (meth)acrylates; and
(c) 0 wt.% to 0.5 wt.% of linear or branched C16-20 alkyl (meth)acrylates, preferably linear C16-18 alkyl (meth)acrylates, wherein the polyalkyl (meth)acrylate has a weight-average molecular weight in the range of 30,000 g/mol to 200,000 g/mol.

The content of each component (a), (b) and (c) is based on the total amount of the polyalkyl (meth)acrylate. In particular, the proportions of components (a), (b) and (c) add up to 100% by weight.

The polyalkyl (meth)acrylates thus prepared are used as VI improvers in hydraulic fluids, especially in arctic hydraulic fluids.

A further object of the present invention is directed to a method for preparing arctic hydraulic fluids with high VI and high flash points, the method comprising the steps of:
(i) preparing a composition comprising:
   (A) 5 wt.% to 80 wt.%, preferably 20 wt.% to 45 wt.%, of tetrabutene; **and**
   (B) 20 wt.% to 95 wt.%, preferably 55 wt.% to 80 wt.%, of a polyalkyl (meth)acrylate comprising:
      (a) 5 wt.% to 25 wt.% of C1-4 alkyl (meth)acrylates, preferably methyl methacrylate;
      (b) 75 wt.% to 95 wt.% of linear or branched C8-15 alkyl (meth)acrylates, preferably linear or branched C12-15 alkyl (meth)arylates; and
      (c) 0 wt.% to 0.5 wt.% of linear or branched C16-20 alkyl (meth)acrylates, preferably linear C16-18 alkyl (meth)acrylates, wherein the polyalkyl (meth)acrylate has a weight-average molecular weight in the range of 30,000 g/mol to 200,000 g/mol; and
(ii) adding the composition prepared under (i) to a hydraulic fluid.

The content of each component (A) and (B) is based on the total amount of the composition. In particular, the proportions of components (A) and (B) add up to 100% by weight.

The content of each component (a), (b) and (c) is based on the total amount of the polyalkyl (meth)acrylate. In particular, the proportions of components (a), (b) and (c) add up to 100% by weight.

A further object of the present invention is directed to a hydraulic formulation, comprising:
(A) 1 wt.% to 40 wt.%, preferably 4 wt.% to 10 wt.%, of tetrabutene;
(B) 50 wt.% to 89 wt.%, preferably 80 wt.% to 86 wt.%, of a further base oil different than component (A) and selected from the group consisting of highly refined hydrocarbons of API Group III to V;
(C) 10 wt.% to 25 wt.% of a polyalkyl (meth)acrylate comprising:
   (a) 5 wt.% to 25 wt.% of C1-4 alkyl (meth)acrylates, preferably methyl methacrylate;
   (b) 75 wt.% to 95 wt.% of C12-15 alkyl (meth)acrylates, and
   (c) 0 wt.% to 0.5 wt.% of linear or branched C16-20 alkyl (meth)acrylates, preferably linear C16-18 alkyl methacrylates, wherein the polyalkyl (meth)acrylate has a weight-average molecular weight in the range of 30,000 g/mol to 200,000 g/mol; and
(D) 0 wt.% to 5 wt.% of one or more further additives.

The content of each component (A), (B); (C) and (D) is based on the total composition of the hydraulic formulation. In a particular embodiment, the proportions of components (A), (B), (C) and (D) add up to 100% by weight.

The hydraulic formulations are characterized by a high viscosity index. The viscosity index of the hydraulic formulation is at least 280, more preferably at least 300.

The industrial fluid according to the present invention may also contain, as component (D), further additives selected from the group consisting of conventional VI improvers, dispersants, defoamers, detergents, antioxidants, pour point depressants, antiwear additives, extreme pressure additives, friction modifiers, anticorrosion additives, dyes and mixtures thereof.

Conventional VI improvers include hydrogenated styrene-diene copolymers (HSDs, US4116 917, US3772196 and US4788316), especially based on butadiene and isoprene, and also olefin copolymers (OCPs, K. Marsden: "Literature Review of OCP Viscosity Modifiers", Lubrication Science 1 (1988), 265), especially of the poly(ethylene-co-propylene) type, which may often also be present in N/O-functional form with dispersing action, or PAMAs, which are usually present in N-functional form with advantageous additive properties *(boosters)* as dispersants, wear protection additives and/or friction modifiers (DE 1 520 696 to Röhm and Haas, WO 2006/007934 to RohMax Additives).

Compilations of VI improvers and pour point depressants for lubricant oils, especially motor oils, are detailed, for example, in T. Mang, W. Dresel (eds.): "Lubricants and Lubrication", Wiley-VCH, Weinheim 2001: R. M. Mortier, S. T. Orszulik (eds.): "Chemistry and Technology of Lubricants", Blackie Academic & Professional, London 1992; or J. Bartz: "Additive für Schmierstoffe", Expert-Verlag, Renningen-Malmsheim 1994.

Appropriate dispersants include poly-(isobutylene) derivatives, for example poly(isobutylene)succinimides (PIBSIs), including borated PIBSIs; and ethylene-propylene oligomers having N/O functionalities.

Dispersants (including borated dispersants) are preferably used in an amount of 0 to 5% by weight, based on the total amount of the lubricating oil composition.

Suitable defoamers are silicone oils, fluorosilicone oils, fluoroalkyl ethers, etc.

The defoaming agent is preferably used in an amount of 0.005 to 0.1% by weight, based on the total amount of the lubricating oil composition.

The preferred detergents include metal-containing compounds, for example phenoxides; salicylates; thiophosphonates, especially thiopyrophosphonates, thiophosphonates and phosphonates; sulfonates and carbonates. As metal, these compounds may contain especially calcium, magnesium and barium. These compounds may preferably be used in neutral or overbased form.

Detergents are preferably used in an amount of 0.2 to 1% by weight, based on the total amount of the lubricating oil composition.

The suitable antioxidants include, for example, phenol-based antioxidants and amine-based antioxidants.

Phenol-based antioxidants include, for example, octadecyl-3-(3,5-di-tert-butyl-4-hydroxyphenyl)propionate; 4,4' -methylenebis(2,6-di-tert-butylphenol); 4,4' -bis(2,6-di-t-butylphenol); 4,4' -b is(2-methyl-6-t-butylphenol); 2,2' -methylenebis(4-ethyl-6-t-butylphenol); 2,2' - methylenebis( 4-methyl-6-t-butyl phenol); 4,4' -butyl idenebis(3-methyl-6-t-butylphenol); 4,4'-isopropylidenebis(2,6-di-t-butylphenol); 2,2'-methylenebis(4-methyl-6-nonylphenol); 2,2'-isobutylidenebis(4,6-dimethylphenol); 2,2'-methylenebis(4-methyl-6-cyclohexylphenol); 2,6-di-t-butyl-4-methylphenol; 2,6-di-t-butyl-4-ethyl-phenol; 2,4-dimethyl-6-t-butylphenol; 2,6-di-t-amyl-p-cresol; 2,6-di-t-butyi-4-(N,N'-dimethylaminomethylphenol); 4,4'thiobis(2-methyl-6-t-butylphenol); 4,4'-thiobis(3-methyl-6-t-butylphenol); 2,2'-thiobis(4-methyl-6-t-butylphenol); bis(3-methyl-4-hydroxy-5-t-butylbenzyl) sulfide; bis(3,5-di-t-butyl-4-hydroxybenzyl) sulfide; n-octyl-3-(4-hydroxy-3,5-di-t-butylphenyl)propionate; n-octadecyl-3-(4-hydroxy-3,5-di-t-butylphenyl)propionate; 2,2'-thio[diethyl-bis-3-(3,5-di-t-butyl-4-hydroxyphenyl)propionate], etc. Of those, especially preferred are bis-phenol-based antioxidants and ester group containing phenol-based antioxidants.

The amine-based antioxidants include, for example, monoalkyldiphenylamines such as monooctyldiphenylamine, monononyldiphenylamine, etc.; dialkyldiphenylamines such as 4,4' - dibutyldiphenylamine, 4,4'-dipentyldiphe nylamine, 4,4'- dihexyldiphenylamine, 4,4'-diheptyldiphenylamine, 4,4'-dioctyldiphenylamine, 4,4'-dinonyldiphenylamine, etc.; polyalkyldiphenylamines such as tetrabutyldiphenylamine, tetrahexyldiphenylamine, tetraoctyldiphenylamine, tetranonyldiphenylamine, etc.; naphthylamines, concretely alpha-naphthylamine, phenyl-alpha-naphthylamine and further alkyl-substituted phenyl-alpha-naphthylamines such as butylphenyl-alpha-naphthylamine, pentylphenyl-alpha-naphthylamine, hexylphenyl-alpha-naphthylamine, heptylphenyl-alpha-naphthylamine, octylphenyl-alpha-naphthylamine, nonylphenyl-alpha-naphthylamine, etc. Of those, diphenylamines are preferred to naphthylamines, from the viewpoint of the antioxidation effect thereof.

Suitable antioxidants may further be selected from the group consisting of compounds containing sulfur and phosphorus, for example metal dithiophosphates, for example zinc dithiophosphates (ZnDTPs), "OOS triesters" = reaction products of dithiophosphoric acid with activated double bonds from olefins, cyclopentadiene, norbornadiene, alpha-pinene, polybutene, acrylic esters, maleic esters (ashless on combustion); organosulfur compounds, for example dialkyl sulfides, diaryl sulfides, polysulfides, modified thiols, thiophene derivatives, xanthates, thioglycols, thioaldehydes, sulfur-containing carboxylic acids; heterocyclic sulfur/nitrogen compounds, especially dialkyldimercaptothiadiazoles, 2-mercaptobenzimidazoles; zinc bis(dialkyldithiocarbamate) and methylene bis(dialkyldithiocarbamate); organophosphorus compounds, for example triaryl and trialkyl phosphites; organocopper compounds and overbased calcium- and magnesium-based phenoxides and salicylates.

Antioxidants are used in an amount of 0 to 15% by weight, preferably 0.1 to 10% by weight, more preferably 0.2 to 2% by weight, based on the total amount of the lubricating oil composition.

The pour-point depressants include ethylene-vinyl acetate copolymers, chlorinated paraffin-naphthalene condensates, chlorinated paraffin-phenol condensates, polymethacrylates, polyalkylstyrenes, etc. Preferred are polymethacrylates having a mass-average molecular weight of from 5.000 to 50.000 g/mol.

The amount of the pour point depressant is preferably from 0.1 to 1% by weight, based on the total amount of the lubricating oil composition.

The preferred antiwear and extreme pressure additives include sulfur-containing compounds such as zinc dithiophosphate, zinc di-C₃₋₁₂-alkyldithiophosphates (ZnDTPs), zinc phosphate, zinc dithiocarbamate, molybdenum dithiocarbamate, molybdenum dithiophosphate, disulfides, sulfurized olefins, sulfurized oils and fats, sulfurized esters, thiocarbonates, thiocarbamates, polysulfides, etc.; phosphorus-containing compounds such as phosphites, phosphates, for example trialkyl phosphates, triaryl phosphates, e.g. tricresyl phosphate, amine-neutralized mono- and dialkyl phosphates, ethoxylated mono- and dialkyl phosphates, phosphonates, phosphines, amine salts or metal salts of those compounds, etc.; sulfur and phosphorus-containing anti-wear agents such as thiophosphites, thiophosphates, thiophosphonates, amine salts or metal salts of those compounds, etc.

The antiwear agent may be present in an amount of 0 to 3% by weight, preferably 0.1 to 1.5% by weight, more preferably 0.2 to 0.9% by weight, based on the total amount of the lubricating oil composition.

Friction modifiers used may include mechanically active compounds, for example molybdenum disulfide, graphite (including fluorinated graphite), poly(trifluoroethylene), polyamide, polyimide; compounds that form adsorption layers, for example long-chain carboxylic acids, fatty acid esters, ethers, alcohols, amines, amides, imides; compounds which form layers through tribochemical reactions, for example saturated fatty acids, phosphoric acid and thiophosphoric esters, xanthogenates, sulfurized fatty acids; compounds that form polymer-like layers, for example ethoxylated dicarboxylic partial esters, dialkyl phthalates, methacrylates, unsaturated fatty acids, sulfurized olefins or organometallic compounds, for example molybdenum compounds (molybdenum dithiophosphates and molybdenum dithiocarbamates MoDTCs) and combinations thereof with ZnDTPs, copper-containing organic compounds.

Friction modifiers may be used in an amount of 0 to 6% by weight, preferably 0.05 to 4% by weight, more preferably 0.1 to 2% by weight, based on the total amount of the lubricating oil composition.

Some of the compounds listed above may fulfil multiple functions. ZnDTP, for example, is primarily an antiwear additive and extreme pressure additive, but also has the character of an antioxidant and corrosion inhibitor (here: metal passivator/deactivator).

The above-detailed additives are described in detail, inter alia, in T. Mang, W. Dresel (eds.): "Lubricants and Lubrication", Wiley-VCH, Weinheim 2001; R. M. Mortier, S. T. Orszulik (eds.): "Chemistry and Technology of Lubricants".

The invention has been illustrated by the following non-limiting examples.

### Experimental Part

### Abbreviations

- AMA: alkyl methacrylate
- AMG-10: low temperature hydraulic oil, pure base oil commercially available from LLK International
- Berylane: Berylane^{®} 230, synthetic API Group V base oil from Total with a KV40 of 2.3 cSt
- BV: bulk viscosity
- C12/14 AMA: mixture of linear C12 and C14 alkyl methacrylates
- C12-15 AMA1: mixture of 67% linear and 23% branched C12 to C15 alkyl methacrylates
- C12-15 AMA2: mixture of 40% linear and 60% branched C12 to C15 alkyl methacrylates
- C16/18 AMA: mixture of linear C16 and C18 alkyl methacrylates
- CTA: chain transfer agent
- FP: flash point
- nDDM: n-dodecyl mercaptane
- HiTEC^{®} 521: HF performance package commercially available from Afton
- Ini 1: tert-butylperoxy-2-ethylhexanoate
- Ini 2: tert-amylperoxy-2-ethylhexanoate
- KRL: "Kegelrollenlager"
- KV: kinematic viscosity measured according to ASTM D445
- KV-30: kinematic viscosity measured @-30°C according to ASTM D445
- KV40: kinematic viscosity measured @40°C according to ASTM D445
- KV100: kinematic viscosity measured @100°C according to ASTM D445
- LIO: light isoparaffinic oil, pure base oil commercially available from LLK International
- MGE-10A: low temperature hydraulic oil, pure base oil commercially available from LLK International
- MMA: methyl methacrylate (M = 100.12 g/mol)
- Mₙ: number-average molecular weight
- M_{w}: weight-average molecular weight
- PDI: polydispersity index
- PP: pour point
- RRF 101: hydrodesulfonated gas oil
- TAPEH: tert-amylperoxy-2-ethylhexanoate
- TBPEH: tert-butylperoxy-2-ethylhexanoate
- tBPO: tert-butylperoxy-2-ethylhexanoate
- Tetrabutane: saturated isoparaffins with 16, 20 and 24 carbon atoms
- Tetrabutene: mixture of not fully saturated isoparaffins with 16 to 24 carbon atoms
- VHVI 4: hydrotreated heavy paraffinic base oil, commercially available from LLK International
- VI: viscosity index
- VPL 14-520: VISCOPLEX^{®} 14-520, defoamer commercially available from Evonik

### Test methods

The polyalkyl (meth)acrylates prepared according to the present invention and the comparative examples were characterized with respect to their molecular weight, PDI and their bulk viscosity at 100°C (BV100).

The molecular weight and the polydispersity of the polyalkyl (meth)acrylates can be determined by known methods. For example, gel permeation chromatography (GPC) can be used. It is equally possible to use an osmometric process, for example vapor phase osmometry, to determine the molecular weights. The processes mentioned are, for example, described in: P.J. Flory, "Principles of Polymer Chemistry" Cornell University Press (1953), Chapter VII, 266-316 and "Macromolecules, an Introduction to Polymer Science", F.A. Bovey and F.H. Winslow, Editors, Academic Press (1979), 296-312 and W.W. Yau, J.J. Kirkland and D.D. Bly, "Modern Size Exclusion Liquid Chromatography, John Wiley and Sons, New York, 1979. To determine the molecular weights of the polymers presented herein, preference is given to using gel permeation chromatography.

The weight-average molecular weights (M_{w}) of the polyalkyl (meth)acrylates were determined by gel permeation chromatography (GPC) using polymethyl methacrylate calibration standards according to DIN 55672-1 using the following measurement conditions:

| | |
|---|---|
| Eluent: | tetrahydrofuran (THF), continuously distilled and circulated by pump |
| Oven temperature: | 35°C |
| Column: | the column set consists of four columns: SDV 106 Å, SDV 104 Å and SDV 103 Å (PSS Standards Service GmbH, Mainz, Germany), all with the size of 300 x 8 mm and an average particle size of 10 µm |
| Flow rate: | 1 mL/min |
| Injected volume: | 100 µL |
| Instrument: | Agilent 1100 series consisting of an autosampler, pump and column oven |
| Detection device: | a refractive index detector from Agilent 1260 series. |

The bulk viscosity was determined to ASTM D445.

The compositions prepared according to the present invention were characterized with respect to their kinematic viscosity at -30°C (KV-30), 40°C (KV40) and 100°C (KV100) to ASTM D445, their viscosity index (VI) to ASTM D2270, flash point to ASTM D-3278 (polymer compositions) or to ASTM D-92 (formulations; Cleveland open cup), pour point to ASTM D5950, density to ASTM D4052, their shear stability loss at 40°C and 100°C to ASTM L-45-A-99 and their shear stability viscosity loss at 100°C to ASTM 2603.

The oxidation stability of the hydraulic formulations was determined by the Rancimat test @ 110°C according to DIN EN 14112.

### (1) General polymer synthesis (batch process)

A 1L-reactor equipped with a thermometer, a temperature controller, an additional funnel, a purge gas inlet and a water-cooled reflux condenser, was charged with 150 g of a solvent (Berylane^{®}, tetrabutane or tetrabutene) and 550 g of a monomer mixture.

The monomer mixtures used are presented in Table 1.

Subsequently, a defined amount (based on the total amount of monomer mixture) of nDDM was added as chain transfer agent (CTA). The amounts are outlined in Table 2.

The reaction was performed under nitrogen. The reactor was then heated to a temperature of about 105°C. When the reaction temperature was reached, a 25% initiator solution (0.25% tert-butylperoxy-2-ethylhexanoate in Berylane^{®}, tetrabutane or tetrabutene) was added in 3 steps: 5% of the initiator solution within 1 h, 25% within the second hour and 70% within the third hour. Table 2 shows the amounts of initiator and CTA used to prepare the polymers via the batch process. After all of the initiator solution was charged, the reaction mixture was hold at the reaction temperature for another hour holding period.

Subsequently, a chaser shot (0.20%, based on the total amount of the monomer mixture) of tBPO was added and the reaction mixture kept for another hour at the reaction temperature.

The above-described process yielded 700 g of a polymer solution having a crude polymer solids content as outlined in Table 1 below.

**Table 1: Monomer mixtures used to prepare the polymers via the batch process and solid content of the resulting polymer solutions.**

| **Example** | **C1 AMA** | **C12/14 AMA** | **C12-15 AMA1** | **C12-C15 AMA2** | **C16/18 AMA** | **Solids** |
|---|---|---|---|---|---|---|
| | **[wt.%]** | **[wt.%]** | **[wt.%]** | **[wt.%]** | **[wt.%]** | **[%]** |
| **Polymer 1a*⁾** | 13.3 | 86.0 | 0.4 | -- | 0.2 | 78.1 |
| **Polymer 1b*)** | 13.3 | 86.0 | 0.4 | -- | 0.2 | 78.1 |
| **Polymer 1c** | 13.3 | 86.0 | 0.4 | -- | 0.2 | 78.1 |
| **Polymer 2a*⁾** | 16.0 | 84.0 | -- | -- | -- | 80.0 |
| **Polymer 2b*****⁾** | 16.0 | 84.0 | -- | -- | -- | 80.0 |
| **Polymer 2c** | 16.0 | 84.0 | -- | -- | -- | 80.0 |

| | | | | | | |
|---|---|---|---|---|---|---|
| *⁾ comparative example | | | | | | |

**Table 2: Amounts of initiator and CTA used to prepare the polymers via the batch process.**

| **Example** | **Solvent** | **Ini 1 (total)** | **Ini 1 (total)** | **CTA** | **CTA** | **CS Ini 1** | **CS Ini 1** |
|---|---|---|---|---|---|---|---|
| | | **[wt.%]** | **[g]** | **[wt.%]** | **[g]** | **[wt.%]** | **[g]** |
| **Polymer 1a*⁾** | Berylane^{®} | 0.16 | 0.87 | 0.51 | 2.77 | 0.2 | 1.09 |
| **Polymer 1b*)** | Tetrabutane | 0.16 | 0.87 | 0.6 | 3.26 | 0.2 | 1.09 |
| **Polymer 1c** | Tetrabutene | 0.16 | 0.87 | 0.51 | 2.77 | 0.2 | 1.09 |
| **Polymer 2a*⁾** | Berylane^{®} | 0.45 | 2.5 | 0.80 | 4.44 | 0.2 | 1.11 |
| **Polymer 2b*)** | Tetrabutane | 0.45 | 2.5 | 0.91 | 5.15 | 0.2 | 1.11 |
| **Polymer 2c** | Tetrabutene | 0.45 | 2.5 | 0.69 | 4.87 | 0.2 | 1.11 |

| | | | | | | | |
|---|---|---|---|---|---|---|---|
| *⁾ comparative example CS = chaser shot | | | | | | | |

### (2) General polymer synthesis (feed process)

A 1 L-reactor, equipped with a thermometer, a temperature controller, an additional funnel, a purge gas inlet and a water-cooled reflux condenser, was charged with 308 g of a solvent (Berylane^{®}, tetrabutane or tetrabutene) and 34.2 g of a monomer mixture. The details of the monomer mixtures are presented in Table 3 further down.

For this procedure, the reactor was heated to a temperature of 93°C. When the desired reaction temperature was reached, a certain amount of initiator (based on the total amount of the monomer mixture) was added to the reactor and the residual initiator (based on the total amount of monomer mixture) was added to the remaining monomer mixture. Table 4 shows the amounts of initiator and demulsifier used to prepare the polymers via the feed process.

Subsequently, 357.8 g of the monomer mixture was added via continuous feed into the reactor and maintained over 3.5 hours. After all the remaining monomer mixture was charged to the reactor, the reaction mixture was hold at the reaction temperature for another two hours holding period. Subsequently, a chaser shot (based on the total amount of the monomer mixture) of initiator was added and the reaction mixture kept for another five hours at the reaction temperature. In addition, 0.02% of a demulsifier was added to Polymer 3.

The above-described process yielded 700 g of a polymer solution having a crude polymer solids content as outlined in Table 3 below.

**Table 3: Monomer mixtures used to prepare the polymers via the feed process and solid content of the resulting polymer solutions.**

| **Example** | **C1 AMA** | **C12/14 AMA** | **C12-15 AMA1** | **C12-C15 AMA2** | **C16/18 AMA** | **Solids** |
|---|---|---|---|---|---|---|
| | **[wt.%)** | **[wt.%]** | **[wt.%]** | **[wt.%]** | **[wt.%]** | **[%]** |
| **Polymer 3a*⁾** | 13.0 | 86.6 | 0.2 | -- | 0.2 | 68.3 |
| **Polymer 3b*)** | 13.0 | 86.6 | 0.2 | -- | 0.2 | 68.3 |
| **Polymer 4a*⁾** | 5.0 | -- | -- | 95.0 | -- | 56.0 |
| **Polymer 4b*)** | 5.0 | -- | -- | 95.0 | -- | 56.0 |
| **Polymer 4c** | 5.0 | -- | -- | 95.0 | -- | 56.0 |

| | | | | | | |
|---|---|---|---|---|---|---|
| *⁾ comparative example | | | | | | |

**Table 4: Amounts of initiator used to prepare the polymers via the feed process.**

| **Example** | **Solvent** | **Ini 2 (total)** | **Ini 2 (total)** | **Ini 1** | **Ini 1** | **CS Ini 2** | **CS Ini 2** | **CS Ini 1** | **CS Ini 1** |
|---|---|---|---|---|---|---|---|---|---|
| | | **[wt.%]** | **[g]** | **[wt.%]** | **[g]** | **[wt.%]** | **[g]** | **[wt.%]** | **[g]** |
| **Polymer 3a*⁾** | Berylane^{®} | 0.75 | 3.56 | - | - | 0.2 | 0.95 | | |
| **Polymer 3b*)** | Tetrabutane | 0.82 | 3.89 | - | - | 0.2 | 0.95 | | |
| **Polymer 4a*⁾** | Berylane^{®} | | | 0.62 | 2.42 | | | 0.2 | 0.78 |
| **Polymer 4b*)** | Tetrabutane | | | 0.72 | 2.81 | | | 0.2 | 0.78 |
| **Polymer 4c** | Tetrabutene | | | 0.20 | 0.78 | | | 0.2 | 0.78 |

| | | | | | | | | | |
|---|---|---|---|---|---|---|---|---|---|
| *) comparative example CS = chaser shot | | | | | | | | | |

The following Table 5 gives an overview of the reaction mixtures used to prepare the polymers.

**Table 5: Reaction mixtures used to prepare the polymers in batch and feed process.**

| **Example** | **monomer mixture used** | **amount** | **base oil used** | **amount** | **Process** |
|---|---|---|---|---|---|
| | | **[wt.%]** | | **[wt.%]** | |
| **Composition 1A*⁾** | Polymer 1 | 78.1 | Berylane^{®} | 21.9 | Batch |
| **Composition 1B*)** | Polymer 1 | 78.1 | Tetrabutane | 21.9 | Batch |
| **Composition 1C** | Polymer 1 | 78.1 | Tetrabutene | 21.9 | Batch |
| **Composition 2A*⁾** | Polymer 2 | 80.0 | Berylane^{®} | 20.0 | Batch |
| **Composition 2B*)** | Polymer 2 | 80.0 | Tetrabutane | 20.0 | Batch |
| **Composition 2C** | Polymer 2 | 80.0 | Tetrabutene | 20.0 | Batch |
| **Composition 3A*⁾** | Polymer 3 | 68.3 | Berylane^{®} | 31.7 | Feed |
| **Composition 3B *)** | Polymer 3 | 68.3 | Tetrabutane | 31.7 | Feed |
| **Composition 4A*⁾** | Polymer 4 | 56.0 | Berylane^{®} | 44 | Feed |
| **Composition 4B *)** | Polymer 4 | 56.0 | Tetrabutane | 44 | Feed |
| **Composition 4C** | Polymer 4 | 56.0 | Tetrabutene | 44 | Feed |

| | | | | | |
|---|---|---|---|---|---|
| *⁾ comparative example | | | | | |

Tetrabutane is a C16-rich, branched paraffin-mixture commercially available from Evonik Industries AG. The composition is as follows:

| | **content [mass%]** | **Method** |
|---|---|---|
| **<C16** | max. 2 | GC-Method after calibration |
| **C16** | min 60 | GC-Method after calibration |
| **>C16** | max. 40 | GC-Method after calibration |
| **Flashpoint** | min 118 | DIN 51758 |

Tetrabutene is an olefinic hydrocarbon consisting of branched C16-20 olefin isomers commercially available from Evonik Industries AG.

The physical properties of the polymer compositions prepared according to the present invention are shown in the following Table 6.

**Tabel 6. Physical Properties of Polymers 1-4 prepared in different solvents.**

| **Example** | **M_{W}** | **PDI** | **KV100**⁾** | **KV40**⁾** | **BV100** | **Density @15°C [g/cm³]** | **FP***⁾** |
|---|---|---|---|---|---|---|---|
| | **[g/mol]** | | **[mm²/s]** | **[mm²/s]** | **[mm²/s]** | | **[°C]** |
| **Polymer 1A*⁾** | 70,500 | 2.1 | 4.89 | 13.33 | 1178 | 0.934 | 112 |
| **Polymer 1B*)** | 70,500 | 2.1 | 4.89 | 13.26 | 1398 | 0.930 | 126 |
| **Polymer 1C** | 69,600 | 2.0 | 4.78 | 12.96 | 1207 | 0.930 | 125 |
| **Polymer 2A*⁾** | 51,100 | 2.0 | 4.03 | 10.97 | 1032 | 0.942 | 109 |
| **Polymer 2B*)** | 50,300 | 2.0 | 3.99 | 10.91 | 1131 | 0.936 | 133 |
| **Polymer 2C** | 49,700 | 2.1 | 3.97 | 10.80 | 1116 | 0.939 | 118 |
| **Polymer 3A*⁾** | 99,400 | 2.2 | 5.35 | 14.02 | 756 | 0.915 | 85 |
| **Polymer 3B*)** | 96,900 | 2.5 | 5.32 | 14.19 | 890 | 0.911 | 93 |
| **Polymer 4A*⁾** | 166,000 | 2.6 | 12.44 | 68.33 | 379 | 0.885 | 104 |
| **Polymer 4B*)** | 147,000 | 2.9 | 11.91 | 66.97 | 348 | 0.877 | 118 |
| **Polymer 4C** | 151,000 | 2.6 | 11.92 | 66.32 | 350 | 0.880 | 124 |

| | | | | | | | |
|---|---|---|---|---|---|---|---|
| *⁾ comparative example **⁾ measured as solution of 15.5% of polymer in RRF 101 as solvent ***⁾ measured to ASTM D-3278 | | | | | | | |

The weight-average molecular weights of the polymers prepared according to the present invention are in the range of 49,700 g/mol (Polymer 2C) and 166,000 g/mol (Polymer 4A). The resulting PDIs are in the range of 2 to 3.

It can be seen that the data retrieved for each polymer in the different solvents are within the same range. For example, the molecular weight for Polymers 1A, 1B and 1C, prepared in Berylane^{®}, tetrabutane and tetrabutene, respectively, is about 70,000 g/mol; KV100 is between 4.78 mm²/s and 4.89 mm²/s, KV40 is between 12.96 mm²/s and 13.33 mm²/s, bulk viscosity is between 1178 mm²/s and 1398 mm²/s and density is around 0.93 g/cm³.

Only the flash points vary dependent on the solvent used to prepare the polymer: The flash points for the polymers that are prepared using tetrabutane or tetrabutene as solvent are remarkably higher than for the polymers prepared using Berylane^{®} as solvent.

For comparison, Berylane^{®} has a flash point of 101°C, whereas tetrabutane has a flash point of 124°C.

The following Table 7 shows compositional and viscometric details of different base oils and their carbon footprints.

**Table 7: Compositional and viscometric details of different base oils used to prepare the Polymer compositions 1-4.**

| **Base Oil** | **Density [g/cm³]** | **CA [%]** | **CN [%]** | **CP [%]** | **FP [°C]** | **KV40 [mm²/s]** | **KV100 [mm²/s]** |
|---|---|---|---|---|---|---|---|
| **Test Method** | ISO12185 | | | | ASTM D92 | ASTM D445 | ASTM D445 |
| **Berylane^{®}** | 0.817 (ISO 12185) | 1 | 45 | 54 | 105 | 2.3 | 1.01 |
| **PAO 2** | 0.800 | 0 | 0 | 100 | 160 | 5.0 | 1.7 |
| **Tetrabutane** | 0.818 | 0 | 0 | 100 | 124 | 4.2 | 1.5 |
| **Tetrabutene** | 0.806 | 0 | 0 | 100 | 120 | 3.5 | 1.3 |

Tetrabutane and tetrabutene belong chemically to the group of synthetic hydrocarbons with lubricating viscosity, similar to polyalphaolefins, known as API Group IV base oil. Depending on the product carbon footprint (PCF) of the raw materials and the manufacturing process, tetrabutane and especially tetrabutene are significantly more sustainable than many other synthetic hydrocarbons.

The use of not fully saturated isoparaffins as lubricant base oils allow to formulate lubricants with lower PCF, as hydrogenation requires additional energy (120-180°C plus 6-7 bar plus Nickel catalyst) leading to a higher carbon footprint.

The following Table 8 shows the formulations and Table 9 shows the results retrieved with the polymers prepared according to the present invention in arctic hydraulic fluids.

**Table 8: Hydraulic Formulations (HF) in arctic hydraulic fluids comprising Polymers 1-4.**

| **Example** | **HF-1*⁾** | **HF-2** *) | **HF-3** | **HF-4*⁾** | **HF-5 *)** | **HF-6** | **HF-7*⁾** | **HF-8 *)** | **HF-9** |
|---|---|---|---|---|---|---|---|---|---|
| **Polymer 1A*⁾ [wt.%]** | 16.16 | -- | -- | -- | -- | -- | -- | -- | -- |
| **Polymer 1B** ***⁾ [wt.%]** | -- | 16.16 | -- | -- | -- | -- | -- | -- | -- |

| **Example** | **HF-1*⁾** | **HF-2*)** | **HF-3** | **HF-4*⁾** | **HF-5* )** | **HF-6** | **HF-7*⁾** | **HF-8 *)** | **HF-9** |
|---|---|---|---|---|---|---|---|---|---|
| **Polymer 1C [wt.%]** | -- | -- | 16.16 | -- | -- | -- | -- | -- | -- |
| **Polymer 2A*⁾ [wt.%]** | -- | -- | -- | 21.0 | -- | -- | -- | -- | -- |
| **Polymer 2B*) [wt.%]** | -- | -- | -- | -- | 21.0 | -- | -- | -- | -- |
| **Polymer 2C [wt.%]** | | | | | | 21.0 | | | -- |
| **Polymer 4A*⁾ [wt.%]** | -- | -- | -- | -- | -- | -- | 10.3 | -- | -- |
| **Polymer 4B***) | -- | -- | -- | -- | -- | -- | -- | 10.3 | -- |
| **Polymer 4C [wt.%]** | -- | -- | -- | -- | -- | -- | -- | -- | 10.3 |
| **Berylane^{®} [wt.%]** | 4.64 | -- | -- | 5.5 | -- | -- | 8.2 | -- | -- |
| **Tetrabutane [wt.%]** | -- | 4.64 | -- | -- | 5.5 | -- | -- | 8.2 | -- |
| **Tetrabutene [wt.%]** | -- | -- | 4.64 | -- | -- | 5.5 | -- | -- | 8.2 |
| **HiTEC 521** | 0.9 | 0.9 | 0.9 | 0.85 | 0.85 | 0.9 | 0.9 | 0.9 | 0.9 |
| **VPL 14-520** | 0.06 | 0.06 | 0.06 | 0.02 | 0.02 | 0.06 | 0.06 | 0.06 | 0.06 |
| **MGE-10A** | 44.0 | 44.0 | 44.0 | -- | -- | -- | 44.0 | 44.0 | 44.0 |
| **VHVI-4** | 34.24 | 34.24 | 34.24 | -- | -- | -- | 36.54 | 36.54 | 36.54 |
| **LIO** | -- | -- | -- | 28.5 | 28.5 | 28.5 | -- | -- | -- |
| **AMG-10** | -- | -- | -- | 44.13 | 44.13 | 44.13 | -- | -- | -- |
| **SUM** | 100 | 100 | 100 | 100 | 100 | 100 | 100 | 100 | 100 |

| | | | | | | | | | |
|---|---|---|---|---|---|---|---|---|---|
| *) comparative example | | | | | | | | | |

**Table 8 continued**

| **Example** | **HF-10*⁾** | **HF-11** *) | **HF-12** |
|---|---|---|---|
| **Polymer 1A*) [wt.%]** | 16.5 | -- | -- |
| **Polymer 1B*) [wt.%]** | -- | 16.3 | -- |
| **Polymer 1C [wt.%]** | -- | -- | 16.5 |
| **Berylane^{®} [wt.%]** | 19.7 | -- | -- |
| **Tetrabutane [wt.%]** | -- | 19.7 | -- |
| **Tetrabutene [wt.%]** | -- | -- | 19.8 |
| **HiTEC 521** | 0.9 | 0.9 | 0.9 |
| **VPL 14-520** | 0.06 | 0.06 | 0.06 |
| **MGE-10A** | 27.6 | 32.1 | 30.8 |
| **VHVI-4** | 35.24 | 30.94 | 31.94 |
| **SUM** | 100 | 100 | 100 |

| | | | |
|---|---|---|---|
| *) comparative example | | | |

The following Table 9 shows the viscometric properties of the different base oils and the Hydraulic Formulations (HF).

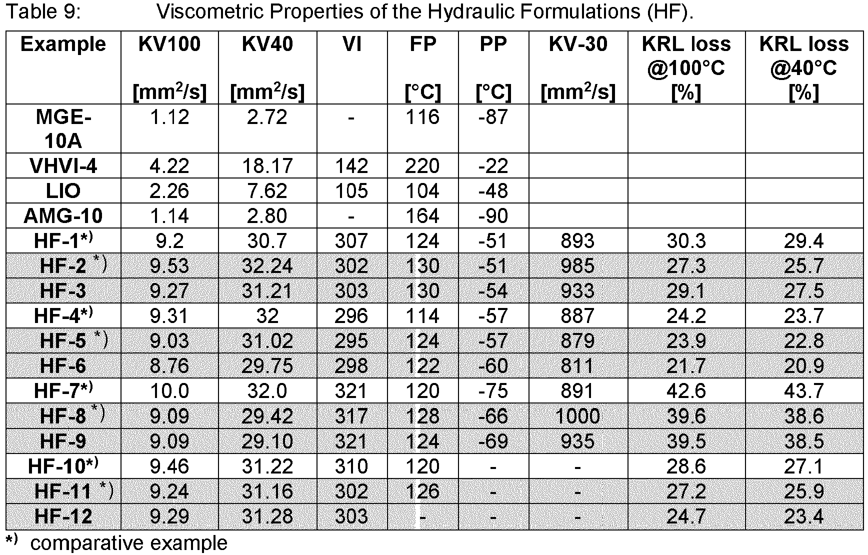

The data show that formulations comprising tetrabutane or tetrabutene have a higher flash point than the formulations using Berylane^{®} instead. Furthermore, the formulations comprising tetrabutane or tetrabutene have lower shear losses (KRL loss) than the formulations using Berylane^{®}.

In addition, the formulations are also characterized by very high VIs of 298 (HF-6) to 321 (HF-9). That means that the thickening efficiency of the polymers is less dependent from the temperature. Due to the importance of good oxidative stability of base oil fluids in hydraulic formulations, saturated hydrocarbons (e.g. tetrabutane) are preferred over unsaturated hydrocarbons (e.g. tetrabutene).

However, the comparison of hydraulic formulations comprising Berylane^{®}, tetrabutane and tetrabutene showed that non-hydrogenated hydrocarbons have the same oxidative performance as Berylane^{®} or the hydrotreated hydrocarbons. Corresponding data retrieved from the Rancimat test are disclosed in the following Table 10.

**Table 10: Results regarding oxidative stability determined by the Rancimat test:**

| **Example** | **Rancimat Test [h]** |
|---|---|
| **HF-1** | > 48 |
| **HF-2** | > 48 |
| **HF-3** | > 48 |

### Conclusions:

The hydraulic formulations comprising tetrabutane or tetrabutene showed better flash points while keeping or improving shear loss stability. The oxidative stability for tetrabutane and tetrabutene in the formulations was the same.

It was therefore shown that saturated and unsaturated isoparaffinic hydrocarbons having 16-24 carbon atoms, especially tetrabutane and tetrabutene, can be used as economical and sustainable base oils.

## Claims

1. A composition comprising:
(A) 5 wt.% to 80 wt.%, preferably 20 wt.% to 45 wt.%, of tetrabutene; and
(B) 20 wt.% to 95 wt.%, preferably 55 wt.% to 80 wt.%, of a polyalkyl (meth)acrylate comprising:
(a) 5 wt.% to 25 wt.% of C1-4 alkyl (meth)acrylates, preferably methyl methacrylate;
(b) 75 wt.% to 95 wt.% of linear or branched C8-15 alkyl (meth)acrylates, preferably linear or branched C12-15 alkyl (meth)acrylates; and
(c) 0 wt.% to 0.5 wt.% of linear or branched C16-20 alkyl (meth)acrylates, preferably linear C16-18 alkyl (meth)acrylates,
wherein the polyalkyl (meth)acrylate has a weight-average molecular weight in the range of 30,000 g/mol to 200,000 g/mol.

2. Method for the preparation of a composition according to claim 1, the method comprising the steps of:
(i) preparing a monomer mixture comprising:
(A) 5 wt.% to 80 wt.%, preferably 20 wt.% to 45 wt.%, of a tetrabutene;
(B) 20 wt.% to 95 wt.%, preferably 55 wt.% to 80 wt.%, of alkyl (meth)acrylates comprising:
(a) 5 wt.% to 25 wt.% of C1-4 alkyl (meth)acrylates, preferably methyl methacrylate;
(b) 75 wt.% to 95 wt.% of linear or branched C8-15 alkyl (meth)acrylates, preferably linear or branched C12-15 alkyl (meth)acrylates; and
(c) 0 wt.% to 0.5 wt.% of linear or branched C16-20 alkyl (meth)acrylates, preferably linear C16-18 alkyl (meth)acrylates,; and
(C) optionally, a chain transfer agent; and
(ii) charging 10 wt.% to 100 wt.% of the monomer mixture prepared under step (i) to a reaction vessel;
(iii) heating the resulting reaction mixture to the desired reaction temperature;
(iv-1) adding 0.1 wt.% to 0.5 wt.%, based on the total amount of monomers used, of a free radical initiator stepwise to the reaction mixture, or
(iv-2) adding 0.1 wt.% to 0.5 wt.%, based on the total amount of monomers used, of a free radical initiator to the reaction mixture and 0.1 wt.% to 1.0 wt.%, based on the total amount of monomers used, to the monomer mixture prepared under step (i);
(v) feeding continuously 0 wt.% to 90 wt.% of the monomer mixture prepared under step (i) to the reaction vessel;
(vi) optionally, after a reaction time of at least 1 hour, adding 0.2 wt.%, based on the total amount of monomers used, of a further shot of the initiator;
(vii) holding the reaction mixture prepared under step (v) for another 1 to 5 hours; and
(viii) optionally, further processing of the reaction mixture to receive the targeted composition.

3. The method according to claim 2, wherein the chain transfer agent is selected from the group consisting of n-dodecyl mercaptan, tert-dodecyl mercaptan, 2-ethylhexylthioglycolate and 2-mercaptoethanol.

4. The method according to any one of claims 2 to 3, wherein the initiator is selected from the group consisting of azo initiators and peroxy compounds; preferably selected form the group consisting of 2,2'-azobis(2-methylbutyronitrile), tert-butylperoxy-2-ethylhexanoate, tert-amylperoxy-2-ethylhexanoate, 1,1-di-tert-butylperoxy-3,3,5-trimethylcyclohexan, tert-butyl-peroxybenzoate, tert-butylperoxy-3,5,5-trimethylhexanoat and 2,2-di(tert-butylperoxy)butane; more preferably tert-butylperoxy-2-ethylhexanoate and tert-amylperoxy-2-ethylhexanoate.

5. Use of tetrabutene as solvent for the preparation of polyalkyl (meth)acrylates, wherein the polyalkyl (meth)acrylates comprise:
(a) 5 wt.% to 25 wt.% of C1-4 alkyl (meth)acrylates, preferably methyl methacrylate;
(b) 75 wt.% to 95 wt.% of linear or branched C8-15 alkyl (meth)acrylates, preferably linear of branched C12-15 alkyl (meth)acrylates; and
(c) 0 wt.% to 0.5 wt.% of linear or branched C16-20 alkyl (meth)acrylates, preferably linear C16-18 alkyl (meth)acrylates,
wherein the polyalkyl (meth)acrylate has a weight-average molecular weight in the range of 30,000 g/mol to 200,000 g/mol.

6. Method for preparing arctic hydraulic fluids with high flash points, the method comprising the steps of:
(i) preparing a composition comprising:
(A) 5 wt.% to 80 wt.%, preferably 20 wt.% to 45 wt.%, of a tetrabutene; and
(B) 20 wt.% to 95 wt.%, preferably 55 wt.% to 80 wt.%, of a polyalkyl (meth)acrylate comprising:
(a) 5 wt.% to 25 wt.% of C1-4 alkyl (meth)acrylates, preferably methyl methacrylate;
(b) 75 wt.% to 95 wt.% of linear or branched C8-15 alkyl (meth)acrylates, preferably linear or branched C12-15 alkyl (meth)acrylates; and
(c) 0 wt.% to 0.5 wt.% of linear or branched C16-20 alkyl (meth)acrylates, preferably linear C16-18 alkyl (meth)acrylates,
wherein the polyalkyl (meth)acrylate has a weight-average molecular weight in the range of 30,000 g/mol to 200,000 g/mol; and
(ii) adding the composition prepared under (i) to a hydraulic fluid.

7. Hydraulic formulation, comprising:
(A) 1 wt.% to 40 wt.%, preferably 4 wt.% to 10 wt.%, of tetrabutene;
(B) 50 wt.% to 89 wt.%, preferably 80 wt.% to 86 wt.%, of a further base oil different than component (A) and selected from the group consisting of highly refined hydrocarbon base oils of API Group III to V and mixtures thereof;
(C) 10 wt.% to 25 wt.% of a polyalkyl (meth)acrylate comprising:
(a) 5 wt.% to 25 wt.% of C1-4 alkyl (meth)acrylates, preferably methyl methacrylate;
(b) 75 wt.% to 95 wt.% of linear or branched C8-15 alkyl (meth)acrylates, preferably linear or branched C12-15 alkyl (meth)acrylates, and
(c) 0 wt.% to 0.5 wt.% of linear or branched C16-20 alkyl (meth)acrylates, preferably linear C16-18 alkyl (meth)acrylates,
wherein the polyalkyl (meth)acrylate has a weight-average molecular weight in the range of 30,000 g/mol to 200,000 g/mol; and
(D) 0 wt.% to 5 wt.% of one or more further additives,
wherein the viscosity index of the hydraulic formulation is at least 280, more preferably at least 300.

## Patentansprüche

1. Zusammensetzung umfassend:
(A) 5 Gew.-% bis 80 Gew.-%, vorzugsweise 20 Gew.-% bis 45 Gew.-%, Tetrabuten; und
(B) 20 Gew.-% bis 95 Gew.-%, vorzugsweise 55 Gew.-% bis 80 Gew.-%, an einem Polyalkyl(meth)acrylat umfassend:
(a) 5 Gew.-% bis 25 Gew.-% C1-4-Alkyl(meth)acrylate, vorzugsweise Methylmethacrylat;
(b) 75 Gew.-% bis 95 Gew.-% an linearen oder verzweigten C8-15-Alkyl(meth)acrylaten, vorzugsweise linearen oder verzweigten C12-15-Alkyl(meth)acrylaten; und
(c) 0 Gew.-% bis 0,5 Gew.-% an linearen oder verzweigten C16-20-Alkyl(meth)acrylaten, vorzugsweise linearen C16-18-Alkyl(meth)acrylaten,
wobei das Polyalkyl(meth)acrylat ein gewichtsgemitteltes Molekulargewicht in dem Bereich von 30.000 g/mol bis 200.000 g/mol aufweist.

2. Verfahren zur Herstellung einer Zusammensetzung nach Anspruch 1, wobei das Verfahren die Schritte umfasst:
(i) Herstellen eines Monomergemischs umfassend:
(A) 5 Gew.-% bis 80 Gew.-%, vorzugsweise 20 Gew.-% bis 45 Gew.-%, an einem Tetrabuten;
(B) 20 Gew.-% bis 95 Gew.-%, vorzugsweise 55 Gew.-% bis 80 Gew.-%, Alkyl(meth)acrylate umfassend:
(a) 5 Gew.-% bis 25 Gew.-% C1-4-Alkyl(meth)acrylate, vorzugsweise Methylmethacrylat;
(b) 75 Gew.-% bis 95 Gew.-% an linearen oder verzweigten C8-15-Alkyl(meth)acrylaten, vorzugsweise linearen oder verzweigten C12-15-Alkyl(meth)acrylaten; und
(c) 0 Gew.-% bis 0,5 Gew.-% an linearen oder verzweigten C16-20-Alkyl(meth)acrylaten, vorzugsweise linearen C16-18-Alkyl(meth)acrylaten; und
(C) gegebenenfalls ein Kettenübertragungsmittel; und
(ii) Füllen von 10 Gew.-% bis 100 Gew.-% des bei Schritt (i) hergestellten Monomergemischs in ein Reaktionsgefäß;
(iii) Erhitzen des erhaltenen Reaktionsgemischs auf die gewünschte Reaktionstemperatur;
(iv-1) schrittweises Zugeben von 0,1 Gew.-% bis 0,5 Gew.-%, bezogen auf die Gesamtmenge der verwendeten Monomere, an einem Radikalinitiator zu dem Reaktionsgemisch, oder
(iv-2) Zugeben von 0,1 Gew.-% bis 0,5 Gew.-%, bezogen auf die Gesamtmenge der verwendeten Monomere, an einem Radikalinitiator zu dem Reaktionsgemisch und 0,1 Gew.-% bis 1,0 Gew.-%, bezogen auf die Gesamtmenge der verwendeten Monomere, zu dem bei Schritt (i) hergestellten Monomergemisch;
(v) kontinuierliches Zuführen von 0 Gew.-% bis 90 Gew.-% des bei Schritt (i) hergestellten Monomergemischs in das Reaktionsgefäß;
(vi) gegebenenfalls, nach einer Reaktionszeit von wenigstens 1 Stunde, Zugeben von 0,2 Gew.-%, bezogen auf die Gesamtmenge der verwendeten Monomere, an einer weiteren Portion des Initiators;
(vii) Halten des bei Schritt (v) hergestellten Reaktionsgemischs für weitere 1 bis 5 Stunden; und
(viii) gegebenenfalls weiteres Verarbeiten des Reaktionsgemischs, um die angestrebte Zusammensetzung zu erhalten.

3. Verfahren nach Anspruch 2, wobei das Kettenübertragungsmittel ausgewählt ist aus der Gruppe bestehend aus n-Dodecylmercaptan, tert-Dodecylmercaptan, 2-Ethylhexylthioglycolat und 2-Mercaptoethanol.

4. Verfahren nach einem der Ansprüche 2 bis 3, wobei der Initiator ausgewählt ist aus der Gruppe bestehend aus Azoinitiatoren und Peroxyverbindungen; vorzugsweise ausgewählt aus der Gruppe bestehend aus 2,2'-Azobis(2-methylbutyronitril), tert-Butylperoxy-2-ethylhexanoat, tert-Amylperoxy-2-ethylhexanoat, 1,1-Di-tert-butylperoxy-3,3,5-trimethylcyclohexan, tert-Butylperoxybenzoat, tert-Butylperoxy-3,5,5-trimethylhexanoat und 2,2-Di(tert-butylperoxy)butan; bevorzugter tert-Butylperoxy-2-ethylhexanoat und tert-Amylperoxy-2-ethylhexanoat.

5. Verwendung von Tetrabuten als Lösungsmittel zur Herstellung von Polyalkyl(meth)acrylaten, wobei die Polyalkyl(meth)acrylate umfassen:
(a) 5 Gew.-% bis 25 Gew.-% C1-4-Alkyl(meth)acrylate, vorzugsweise Methylmethacrylat;
(b) 75 Gew.-% bis 95 Gew.-% an linearen oder verzweigten C8-15-Alkyl(meth)acrylaten, vorzugsweise linearen oder verzweigten C12-15-Alkyl(meth)acrylaten; und
(c) 0 Gew.-% bis 0,5 Gew.-% an linearen oder verzweigten C16-20-Alkyl(meth)acrylaten, vorzugsweise linearen C16-18-Alkyl(meth)acrylaten,
wobei das Polyalkyl(meth)acrylat ein gewichtsgemitteltes Molekulargewicht in dem Bereich von 30.000 g/mol bis 200.000 g/mol aufweist.

6. Verfahren zur Herstellung von arktischen Hydraulikfluiden mit hohen Flammpunkten, wobei das Verfahren die Schritte umfasst:
(i) Herstellen einer Zusammensetzung umfassend:
(A) 5 Gew.-% bis 80 Gew.-%, vorzugsweise 20 Gew.-% bis 45 Gew.-%, an einem Tetrabuten; und
(B) 20 Gew.-% bis 95 Gew.-%, vorzugsweise 55 Gew.-% bis 80 Gew.-%, an einem Polyalkyl(meth)acrylat umfassend:
(a) 5 Gew.-% bis 25 Gew.-% C1-4-Alkyl(meth)acrylate, vorzugsweise Methylmethacrylat;
(b) 75 Gew.-% bis 95 Gew.-% an linearen oder verzweigten C8-15-Alkyl(meth)acrylaten, vorzugsweise linearen oder verzweigten C12-15-Alkyl(meth)acrylaten; und
(c) 0 Gew.-% bis 0,5 Gew.-% an linearen oder verzweigten C16-20-Alkyl(meth)acrylaten, vorzugsweise linearen C16-18-Alkyl(meth)acrylaten,
wobei das Polyalkyl(meth)acrylat ein gewichtsgemitteltes Molekulargewicht in dem Bereich von 30.000 g/mol bis 200.000 g/mol aufweist; und
(ii) Zugeben der bei (i) hergestellten Zusammensetzung zu einem Hydraulikfluid.

7. Hydraulikformulierung umfassend:
(A) 1 Gew.-% bis 40 Gew.-%, vorzugsweise 4 Gew.-% bis 10 Gew.-%, Tetrabuten;
(B) 50 Gew.-% bis 89 Gew.-%, vorzugsweise 80 Gew.-% bis 86 Gew.-%, an einem weiteren Grundöl, das von Komponente (A) verschieden ist und ausgewählt ist aus der Gruppe bestehend aus hochraffinierten Kohlenwasserstoffgrundölen der API-Gruppen III bis V und Gemischen davon;
(C) 10 Gew.-% bis 25 Gew.-% an einem Polyalkyl(meth)acrylat umfassend:
(a) 5 Gew.-% bis 25 Gew.-% C1-4-Alkyl(meth)acrylate, vorzugsweise Methylmethacrylat;
(b) 75 Gew.-% bis 95 Gew.-% an linearen oder verzweigten C8-15-Alkyl(meth)acrylaten, vorzugsweise linearen oder verzweigten C12-15-Alkyl(meth)acrylaten, und
(c) 0 Gew.-% bis 0,5 Gew.-% an linearen oder verzweigten C16-20-Alkyl(meth)acrylaten, vorzugsweise linearen C16-18-Alkyl(meth)acrylaten,
wobei das Polyalkyl(meth)acrylat ein gewichtsgemitteltes Molekulargewicht in dem Bereich von 30.000 g/mol bis 200.000 g/mol aufweist; und
(D) 0 Gew.-% bis 5 Gew.-% an einem oder mehreren weiteren Zusatzstoffen,
wobei der Viskositätsindex der Hydraulikformulierung wenigstens 280, bevorzugter wenigstens 300, beträgt.

## Revendications

1. Composition comprenant :
(A) 5 % en poids à 80 % en poids, préférablement 20 % en poids à 45 % en poids, de tétrabutène ; et
(B) 20 % en poids à 95 % en poids, de préférence 55 % en poids à 80 % en poids, d'un poly(méth)acrylate d'alkyle comprenant :
(a) 5 % en poids à 25 % en poids de (méth)acrylates d'alkyle en C1-4, de préférence du méthacrylate de méthyle ;
(b) 75 % en poids à 95 % en poids de (méth)acrylates d'alkyle en C8-15 linéaire ou ramifié, de préférence des (méth)acrylates d'alkyle en C12-15 linéaire ou ramifié ; et
(c) 0 % en poids à 0,5 % en poids de (méth)acrylates d'alkyle en C16-20 linéaire ou ramifié, de préférence des (méth)acrylates d'alkyle en C16-18 linéaire,
le poly(méth)acrylate d'alkyle possédant un poids moléculaire moyen en poids dans la plage de 30 000 g/mole à 200 000 g/mole.

2. Procédé de préparation d'une composition selon la revendication 1, le procédé comprenant les étapes de :
(i) préparation d'un mélange de monomères comprenant :
(A) 5 % en poids à 80 % en poids, préférablement 20 % en poids à 45 % en poids, d'un tétrabutène ;
(B) 20 % en poids à 95 % en poids, de préférence 55 % en poids à 80 % en poids de (méth)acrylates d'alkyle comprenant :
(a) 5 % en poids à 25 % en poids de (méth)acrylates d'alkyle en C1-4, de préférence du méthacrylate de méthyle ;
(b) 75 % en poids à 95 % en poids de (méth)acrylates d'alkyle en C8-15 linéaire ou ramifié, de préférence des (méth)acrylates d'alkyle en C12-15 linéaire ou ramifié ; et
(c) 0 % en poids à 0,5 % en poids de (méth)acrylates d'alkyle en C16-20 linéaire ou ramifié, de préférence des (méth)acrylates d'alkyle en C16-18 linéaire ; et
(C) éventuellement, un agent de transfert de chaîne ; et
(ii) chargement de 10 % en poids à 100 % en poids du mélange de monomères préparé dans l'étape (i) dans un récipient de réaction ;
(iii) chauffage du mélange réactionnel résultant jusqu'à la température de réaction souhaitée ;
(iv-1) ajout de 0,1 % en poids à 0,5 % en poids, sur la base de la quantité totale de monomères utilisés, d'un initiateur de radicaux libres par étapes au mélange réactionnel, ou
(iv-2) ajout de 0,1 % en poids à 0,5 % en poids, sur la base de la quantité totale de monomères utilisés, d'un initiateur de radicaux libres au mélange réactionnel et de 0,1 % en poids à 1,0 % en poids, sur la base de la quantité totale de monomères utilisés, au mélange de monomères préparé dans l'étape (i) ;
(v) alimentation en continu de 0 % en poids à 90 % en poids du mélange de monomères préparé dans l'étape (i) dans le récipient de réaction ;
(vi) éventuellement, après un temps de réaction d'au moins 1 heure, ajout de 0,2 % en poids, sur la base de la quantité totale de monomères utilisés, d'une dose supplémentaire de l'initiateur ;
(vii) maintien du mélange réactionnel préparé à l'étape (v) pendant 1 à 5 heures supplémentaires ; et
(viii) éventuellement, traitement supplémentaire du mélange réactionnel pour recevoir la composition souhaitée.

3. Procédé selon la revendication 2, dans lequel l'agent de transfert de chaîne est choisi dans le groupe constitué par le n-dodécylmercaptan, le tert-dodécylmercaptan, le 2-éthylhexylthioglycolate et le 2-mercaptoéthanol.

4. Procédé selon l'une quelconque des revendications 2 à 3, dans lequel l'initiateur est choisi dans le groupe constitué par les initiateurs azoïques et les composés peroxy ; de préférence choisi dans le groupe constitué par 2,2'-azobis(2-méthylbutyronitrile), peroxy-2-éthylhexanoate de tert-butyle, peroxy-2-éthylhexanoate de tert-amyle, 1,1-di-tert-butylperoxy-3,3,5-triméthylcyclohexane, peroxybenzoate de tert-butyle, peroxy-3,5,5-triméthylhexanoate de tert-butyle et 2,2-di(tert-butylperoxy)butane ; plus préférablement peroxy-2-éthylhexanoate de tert-butyle et peroxy-2-éthylhexanoate de tert-amyle.

5. Utilisation de tétrabutène comme solvant pour la préparation de poly(méth)acrylates d'alkyle, dans laquelle les poly(méth)acrylates d'alkyle comprennent :
(a) 5 % en poids à 25 % en poids de (méth)acrylates d'alkyle en C1-4, de préférence du méthacrylate de méthyle ;
(b) 75 % en poids à 95 % en poids de (méth)acrylates d'alkyle en C8-15 linéaire ou ramifié, de préférence des (méth)acrylates d'alkyle en C12-15 linéaire ou ramifié ; et
(c) 0 % en poids à 0,5 % en poids de (méth)acrylates d'alkyle en C16-20 linéaire ou ramifié, de préférence des (méth)acrylates d'alkyle en C16-18 linéaire,
le poly(méth)acrylate d'alkyle possédant un poids moléculaire moyen en poids dans la plage de 30 000 g/mole à 200 000 g/mole.

6. Procédé de préparation de fluides hydrauliques arctiques à points éclair élevés, le procédé comprenant les étapes de :
(i) préparation d'une composition comprenant :
(A) 5 % en poids à 80 % en poids, préférablement 20 % en poids à 45 % en poids, d'un tétrabutène ; et
(B) 20 % en poids à 95 % en poids, de préférence 55 % en poids à 80 % en poids, d'un poly(méth)acrylate d'alkyle comprenant :
(a) 5 % en poids à 25 % en poids de (méth)acrylates d'alkyle en C1-4, de préférence du méthacrylate de méthyle ;
(b) 75 % en poids à 95 % en poids de (méth)acrylates d'alkyle en C8-15 linéaire ou ramifié, de préférence des (méth)acrylates d'alkyle en C12-15 linéaire ou ramifié ; et
(c) 0 % en poids à 0,5 % en poids de (méth)acrylates d'alkyle en C16-20 linéaire ou ramifié, de préférence des (méth)acrylates d'alkyle en C16-18 linéaire,
dans lequel le poly(méth) acrylate d'alkyle a un poids moléculaire moyen en poids dans la plage de 30 000 à 200 000 g/mole ; et
(ii) ajout de la composition préparée en (i) à un fluide hydraulique.

7. Formulation hydraulique, comprenant :
(A) 1 % en poids à 40 % en poids, préférablement 4 % en poids à 10 % en poids, de tétrabutène ;
(B) 50 % en poids à 89 % en poids, préférablement 80 % en poids à 86 % en poids, d'une huile de base supplémentaire différente du composant (A) et choisie dans le groupe constitué par des huiles de base hydrocarbonées hautement raffinées des groupes III à V de l'API et leurs mélanges ;
(C) 10 % en poids à 25 % en poids d'un poly(méth)acrylate d'alkyle comprenant :
(a) 5 % en poids à 25 % en poids de (méth)acrylates d'alkyle en C1-4, de préférence du méthacrylate de méthyle ;
(b) 75 % en poids à 95 % en poids de (méth)acrylates d'alkyle en C8-15 linéaire ou ramifié, de préférence des (méth)acrylates d'alkyle en C12-15 linéaire ou ramifié, et
(c) 0 % en poids à 0,5 % en poids de (méth)acrylates d'alkyle en C16-20 linéaire ou ramifié, de préférence des (méth)acrylates d'alkyle en C16-18 linéaire,
dans lequel le poly(méth)acrylate d'alkyle a un poids moléculaire moyen en poids dans la plage de 30 000 à 200 000 g/mole ; et
(D) 0 % en poids à 5 % en poids d'un ou plusieurs autres additifs,
dans laquelle l'indice de viscosité de la formulation hydraulique est d'au moins 280, plus préférablement d'au moins 300.
